# EUROPEAN PATENT APPLICATION

(11) **EP 4 679 838 A1**
(43) Date of publication of application: **14.01.2026**
(21) Application number: 24775076.3
(22) Date of filing: 21.02.2024
(51) Int. Cl.: H04N 21/436, H04N 21/4363, H04N 21/443, H04N 21/485

(54) **DISPLAY DEVICE AND OPERATING METHOD THEREOF**

(30) Priority: 20.03.2023 KR 20230036160
(71) Applicant: Samsung Electronics Co., Ltd., Suwon-si, Gyeonggi-do 16677 (KR)
(72) Inventor: LEE, Jongin, Suwon-si, Gyeonggi-do 16677 (KR); KIM, Sehyun, Suwon-si, Gyeonggi-do 16677 (KR)
(74) Representative: Walaski, Jan Filip
(86) International application number: PCT/KR2024/002284
(87) International publication number: WO 2024/196028

(57) **Abstract**

A display device according to an embodiment includes a display, a communication unit, a memory storing one or more instructions, and at least one processor configured to execute the one or more instructions, wherein the at least one processor executes the one or more instructions to control the communication unit to communicatively couple to a second display device, to control the display to display an item including information about the second display device and information about an external device connected to the second display device, to control the communication unit to, based on a user input to select the item, request the second display device for image data corresponding to the external device, and receive the image data from the second display device, and to control the display to display the received image data.

## Description

### Technical Field

Various embodiments relate to a display device capable of receiving, through another display device, image data to an external device connected to the other display device, and an operating method thereof.

### Background Art

Display devices have a function of displaying images for users to view. The users may view broadcasts through display devices. A display device displays, on a display, a broadcast selected by the user from among broadcast signals transmitted from a broadcasting station. In addition, a smart television (TV) is provided to provide a variety of content in addition to broadcasting functions. The smart TV does not operate manually according to a user's selection, but performs a function of analyzing and providing what the user wants without the user's intervention.

Meanwhile, when an external device, such as a set-top box, a blue-ray disk player, a digital versatile disk (DVD) player, a streaming device, or a home theater, is connected to a display device, such as a TV, the display device may receive and display images from the external device. In addition, the display device may control the connected external device based on a control signal input to a display, and in particular, may turn off the power of the external device.

In addition, the display device may transmit and receive image signals to and from other display device by using a short-range wired/wireless communication network.

### Disclosure of Invention

### Solution to Problem

A first display device according to an embodiment may include a display, a communication unit, a memory storing one or more instructions, and at least one processor configured to execute the one or more instructions.

The at least one processor may execute the one or more instructions to control the communication unit to connect to a second display device.

The at least one processor may execute the one or more instructions to control the display to display an item including information about the second display device and information about an external device connected to the second display device.

The at least one processor may execute the one or more instructions to, based on a user input to select the item, control the communication unit to request the second display device for image data corresponding to the external device and receive the image data from the second display device.

The at least one processor may execute the one or more instructions to control the display to display the received image data.

An operating method of a first display device, according to an embodiment, may include an operation of communicatively coupling to a second display device.

The operating method of the first display device, according to an embodiment, may include an operation of displaying an item including information about the second display device and information about an external device connected to the second display device.

The operating method of the first display device, according to an embodiment, may include an operation of, based on a user input to select the item, requesting the second display device for image data corresponding to the external device.

The operating method of the first display device, according to an embodiment, may include an operation of receiving the image data from the second display device.

The operating method of the first display device, according to an embodiment, may include an operation of displaying the received image data.

### Brief Description of Drawings

FIG. 1 is a diagram illustrating a first display device, a second display device connected to the first display device, and an external device connected to the second display device, according to an embodiment.
FIGS. 2 to 4 are diagrams illustrating examples of a list of external devices displayed on the first display device according to an embodiment.
FIG. 5 is a flowchart illustrating a method by which the first display device receives an image corresponding to an external device through the second display device, according to an embodiment.
FIG. 6 is a diagram for describing a process of approving, by the second display device, a request from the first display device, according to an embodiment.
FIG. 7 is a diagram illustrating an operation of receiving, by the first display device, an external input image from the second display device, according to an embodiment.
FIG. 8 is a flowchart illustrating an operating method of receiving, by the first display device, an external input image from the second display device, according to an embodiment.
FIG. 9 is a diagram illustrating an operation of a case where both the second display device and the external device are in a powered-off state, according to an embodiment.
FIG. 10 is a diagram illustrating an operation of a case where the second display device is a powered-off state, according to an embodiment.
FIG. 11 is a diagram illustrating an operation of a case where the external device is a powered-off state, according to an embodiment.
FIGS. 12 to 14 are diagrams illustrating an operation of a case where the second display device requests to transmit the external input image to the first display device, according to an embodiment.
FIG. 15 is a block diagram illustrating a configuration of the first display device according to an embodiment.
FIG. 16 is a block diagram illustrating a configuration of a display device according to an embodiment.

### Mode for the Invention

The terms used in this specification will be briefly explained, and the present disclosure will be described in detail.

The terms used in the present disclosure are selected from the most widely used general terms possible while considering the functions of the present disclosure, but these may vary depending on the intention of engineers working in the field, precedents, the emergence of new technologies, etc. In addition, in certain cases, there are terms arbitrarily selected by the applicant, and in such cases, their meanings will be described in detail in the description of the relevant disclosure. Therefore, the terms used in the present disclosure should be defined based on the meaning of the terms and the overall content of the present disclosure, rather than simply the names of the terms.

When a part of a specification is said to "include" a component, this does not mean that it excludes other components, but rather that it may include other components, unless otherwise stated. In addition, terms such as "... unit", "module", etc. described in the specification mean a unit that processes at least one function or operation, which may be implemented by hardware or software, or by a combination of hardware and software.

Below, examples are described in detail with reference to the attached drawings so that a person skilled in the art can easily implement the present disclosure. However, the present disclosure may be implemented in various different forms and is not limited to the embodiments described herein. In addition, in order to clearly explain the present disclosure in the drawings, parts that are not related to the explanation are omitted, and similar parts are given similar drawing reference numerals throughout the specification.

The term "user" in the embodiments of the present specification means a person who controls a system, function or operation, and may include a developer, an administrator or an installer.

Additionally, in the embodiments of the present specification, "image" or "picture" may represent a still image, a moving image composed of a plurality of consecutive still images (or frames), or a video.

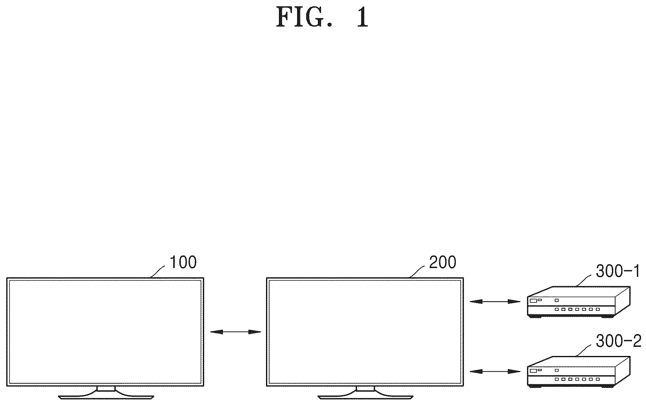

FIG. 1 is a diagram illustrating a first display device, a second display device connected to the first display device, and an external device connected to the second display device, according to an embodiment.

A first display device 100 and a second display device 200 according to an embodiment may be connected to each other through wired/wireless communication.

For example, the first display device 100 and the second display device 200 may be connected to each other through short-range wireless communication, such as wireless local area network (LAN) (e.g., Wireless Fidelity (Wi-Fi)), Bluetooth, etc. The first display device 100 and the second display device 200 may transmit or receive video, audio, and additional information by using communication connected thereto.

The first display device 100 and the second display device 200 according to an embodiment may be TVs, but this is only an example, and may be implemented in various forms including a display. For example, the first display device 100 and the second display device 200 may be implemented as various electronic devices, such as mobile phones, tablet personal computers (PCs), digital cameras, camcorders, laptop computers, tablet PCs, desktops, electronic book terminals, terminals for digital broadcasting, personal digital assistants (PDAs), portable multimedia players (PMPs), navigations, MPEG Audio Layer 3 (MP3) players, wearable devices, etc.

In addition, the first display device 100 and the second display device 200 may be stationary or mobile, and may be digital broadcasting receivers capable of receiving digital broadcasts. In addition, the first display device 100 and the second display device 200 may be implemented as not only flat display devices, but also curved display devices having screens with a curvature or flexible display devices with an adjustable curvature. Output resolutions of the first display device 100 and the second display device 200 may include, for example, high definition (HD), full HD, ultra HD, or a resolution sharper than Ultra HD.

External devices 300-1 and 300-2 according to an embodiment may be a device which reproduces content and provides the content to a display device. For example, the content may denote multimedia content, and may include image, video, audio, text, game, application, etc., but is not limited thereto.

The external devices 300-1 and 300-2 according to an embodiment may include a set-top box, a Blue ray Disk player, a DVD player, a game device, a digital camera, a camcorder, a streaming device, a home theater, etc. Alternatively, the external device 300 may include various electronic devices, such as a smartphone, a tablet PC, a mobile terminal, a video phone, an e-book reader, a desktop PC, a laptop PC, a netbook computer, a PDA, a PMP, a navigation, an MP3 player, a wearable device, etc.

The second display device 200 and the external devices 300-1 and 300-2 according to an embodiment may be connected to each other via wired/wireless communication. For example, the second display device 200 may be connected to the external device 300 via a high-definition multimedia interface (HDMI) port, a mobile high-definition link (MHL) port, a universal serial bus (USB) port, a display port (DP), a thunderbolt port, a video graphics array (VGA) port, an RGB port, a D-subminiature (D-SUB), a digital visual interface (DVI), a component jack, a PC port, etc. However, the present disclosure is not limited thereto, and the second display device 200 and the external devices 300-1 and 300-2 may be connected to each other via short-range wireless communication, such as wireless LAN (e.g., Wi-Fi), Bluetooth, etc. The second display device 200 and the external device 300 may transmit or receive video, audio, and additional information by using connected communication.

However, in the disclosed embodiments, it is described as an example that the second display device 200 and the external devices 300-1 and 300-2 are connected via HDMI communication (HDMI cable).

When the second display device 200 and the external devices 300-1 and 300-2 are connected via an HDMI cable, data and information may be transmitted or received by using a transition minimized differential signaling (TMDS) channel, a display data channel (DDT), and consumer electronics control (CEC). For example, the TMDS channel may be used for transmitting video data and audio data. In addition, the DDC may be used for transmitting EDID information (information indicating display product type, resolution, screen size, luminance, etc., indicating display characteristics) of the second display device 200, which is a sink device, to the external devices 300-1 and 300-2, which are source devices. In addition, the second display device 200 and the external devices 300-1 and 300-2 may control each other via CEC.

The external devices 300-1 and 300-2 according to an embodiment may transmit image data (or image signal) to the second display device 200.

The first display device 100 according to an embodiment may receive the image data corresponding to the external devices 300-1 and 300-2. For example, the second display device 200 may receive the image data from the external devices 300-1 and 300-2 and transmit the received image data to the first display device 100. In the disclosed embodiments, it is described that the second display device 200 is a source device and the first display device 100 is a sink device.

The second display device 200 according to an embodiment may receive the image data by selecting any one of the first external device 300-1 and the second external device 300-2. The second display device 200 may encode the image data received from the selected first external device 300-1 and transmit the encoded image data to the first display device 100. Accordingly, the first display device 100 may receive display the image data output from the first external device 300-1 without directly connecting the first external device 300-1 to the first display device 100.

For example, when the first display device 100 and the second display device 200 are located in different spaces and the first external device 300-1 is connected to the second display device 200, the first display device 100 may receive and display, via the second display device 200, the image data output from the first external device 300-1.

The first display device 100 according to an embodiment may provide information about external devices 300-1 and 300-2 connectable via the second display device 200. For example, the first display device 100 may display a first-1 item including information about the second display device 200 connected to the first display device 100 and information about the first external device 300-1 connected to the second display device 200, and a first-2 item including information about the second display device 200 and information about the second external device 300-2 connected to the second display device 200. **In** this case, the first-1 item and the first-2 item may include a shortcut icon, and the first display device 100 may request the second display device 200 for image data corresponding to any one of the external devices 300-1 and 300-2 based on a user input for selecting the first-1 item or the first-2 item. For example, the first display device 100 may request the second display device 200 for image data corresponding to the first external device 300-1 based on a user input for selecting the first-1 item, and receive the image data corresponding to the first external device 300-1 from the second display device 200. With a single user input for selecting an item (e.g., the first-1 item or the first-2 item) including a shortcut icon according to an embodiment, one of the second display device and the external devices 300-1 and 300-2 connected to the second display device may be selected. Therefore, a user of the first display device 100 may easily view image data corresponding to any one of the external devices 300-1 and 300-2.

The first-1 item and the first-2 item according to an embodiment may be displayed based on whether the first display device 100 has ever received image data output from the external devices 300-1 and 300-2 via the second display device 200, but are not limited thereto.

Alternatively, the second display device 200 according to an embodiment may provide information about the external devices 300-1 and 300-2 connectable to the first display device 100. For example, the second display device 200 may display a second-1 item including information about the first display device 100 connected to the second display device 200 and information about the first external device 300-1 connected to the second display device 200, and a second-2 item including information about the first display device 100 and information about the second external device 300-2 connected to the second display device 200. In this case, the second-1 item and the second-2 item may include a shortcut icon, and the second display device 200 may transmit, to the first display device 100, image data received from any one of the second display device 200 and the external devices 300-1 and 300-2. For example, the second display device 200 may transmit, to the first display device 100, image data received from the first external device 300-1 based on a user input for selecting the second-1 item. With a single user input for selecting an item (e.g., the second-1 item or the second-2 item) including a shortcut icon according to an embodiment, one of the first display device and the external devices 300-1 and 300-2 connected to the second display device may be selected. Therefore, a user of the second display device 200 may easily transmit, to the first display device 100, image data corresponding to any one of the external devices 300-1 and 300-2.

The second-1 item and the second-2 item according to an embodiment may be displayed based on whether the second display device 200 has ever transmitted the image data received from the external devices 300-1 and 300-2 to the first display device 100, but are not limited thereto.

In addition, in order to receive the image data corresponding to the external devices 300-1 and 300-2, the first display device 100 may turn on or control power of at least one of the second display device 200 and the external devices 300-1 and 300-2. In addition, the second display device 200 may receive the image data corresponding to the external devices 300-1 and 300-2 from the external devices 300-1 and 300-2, and in order to transmit the same to the first display device 100, may turn on or control the power of at least one of the first display device 100 and the external devices 300-1 and 300-2.

Below, a detailed description is provided with reference to the drawings.

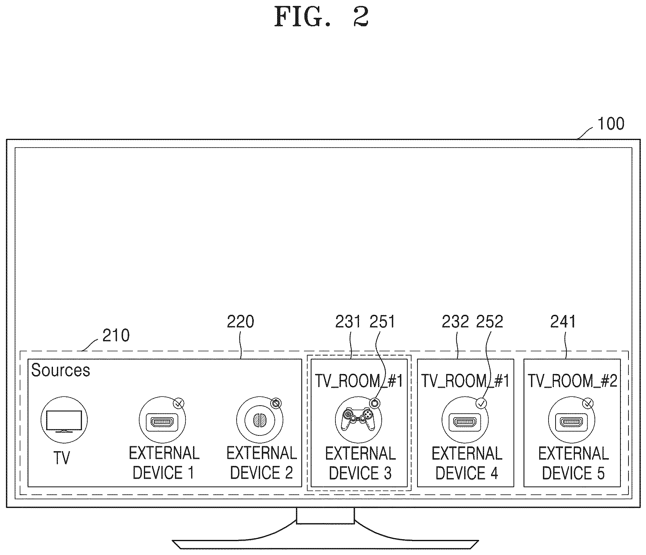

FIGS. 2 to 4 are diagrams illustrating examples of a list of external devices displayed on the first display device according to an embodiment.

Referring to FIG. 2, the first display device 100 according to an embodiment may display a menu for setting a source of the first display device 100 based on a user input.

For example, the first display device 100 may receive, from a control device, a control signal or control command, etc. corresponding to a user input. The control device may include a remote control, a keyboard, a mouse, etc., and may transmit or receive data, information, signal, etc. to or from the first display device 100 via wired or wireless communication. However, the present disclosure is not limited thereto.

The menu for setting a source may include a list 210 of external devices connectable to the first display device 100. In this case, the external device list 210 may include an external device directly connected to the first display device 100 or external devices connected to the second display device 200 which is connected to the second display device 200.

For example, the external device list 210 may include items 220 corresponding to the external devices directly connected to the first display device 100, items 231 and 232 corresponding to the external devices connected to the second display device 200, or items 241 corresponding to external devices connected to another display device (third display device) connected to the first display device 100.

The items 231, 232, and 241 according to an embodiment may be generated according to whether the first display device 100 has ever received, via the second display device 200 or the third display device, image data corresponding to an external device connected to the second display device 200 or the third display device. However, the present disclosure is not limited thereto.

In this case, the item 231 corresponding to a first external device connected to the second display device 200 may include information about the second display device 200 and information about the first external device. For example, the first item 231 may include a device type, model name, location information(e.g., ROOM #1), and on/off status information of the second display device 200 and a device type, model name, on/off status information of the first external device, etc. For example, as shown in FIG. 2, when a power button 251 is displayed on the first item 231, it may show that at least one of the second display device 200 and the first external device is a powered-off state. The first display device 100 may turn on the power of at least one of the second display device 200 and the first external device based on a user input for selecting the power button 251.

In addition, the item 232 corresponding to a second external device connected to the second display device 200 may include information about the second display device 200 and information about the second external device. For example, the second item 232 may include a device type, model name, location information(e.g., ROOM #1), and on/off status information of the second display device 200 and a device type, model name, on/off status information of the second external device, etc. For example, as shown in FIG. 2, when a check 252 is displayed instead of the power button on the second item 232, it may show that both the second display device 200 and the second external device is turned on and available for use.

In addition, the item 241 corresponding to a third external device connected to a third display device may include information about the third display device and information about the third external device. For example, the third item 241 may include a device type, model name, location information(e.g., ROOM #2), and on/off status information of the third display device and a device type, model name, on/off status information of the third external device, etc.

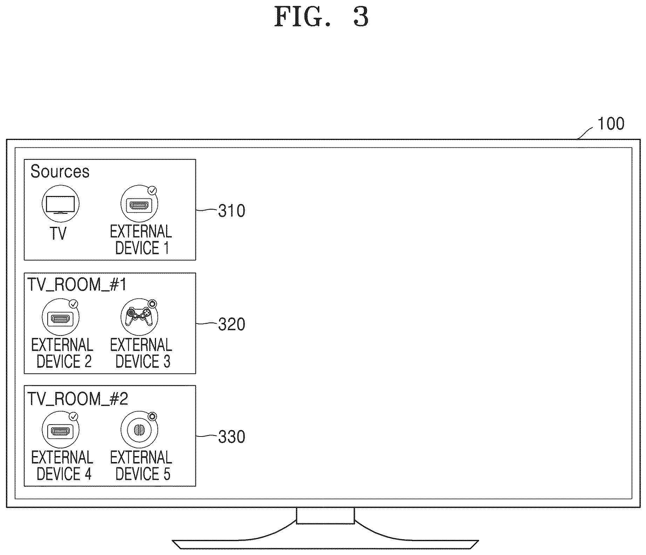

The first display device 100 according to an embodiment may display connectable external devices by being distinguished according to display devices to which external devices are respectively connected. For example, referring to FIG. 3, the first display device 100 may distinguishably display a first external device list 310 including items corresponding to the external devices directly connected to the first display device 100, a second external device list 320 including items corresponding to the external devices connected to the second display device 200, and a third external device list 330 including items corresponding to the external devices connected to the third display device. However, the present disclosure is not limited thereto.

In this case, the second external device list 320 may include information about the second display device, and the items included in the second external device list 320 may include information about the external devices connected to the second display device 200, respectively. Alternatively, each of the items included in the second external device list 320 may include information about the second display device 200 and information about the respective external devices. For example, each of the items may include a device type, model name, location information(e.g., ROOM #1), and on/off status information of the second display device 200 and a device type, model name, on/off status information of the respective external devices, etc. However, the present disclosure is not limited thereto.

In addition, the third external device list 330 may include information about the third display device, and the items included in the third external device list 330 may include information about the external devices connected to the third external device, respectively. Alternatively, each of the items included in the third external device list 330 may include information about the third display device and information about the respective external devices. For example, each of the items may include a device type, model name, location information(e.g., ROOM #2), and on/off status information of the third display device and a device type, model name, on/off status information of the respective external devices, etc. However, the present disclosure is not limited thereto.

The first display device 100 according to an embodiment may display, on an item included in an external device list, information indicating whether the first display device 100 is a device for receiving image data or a device for transmitting image data.

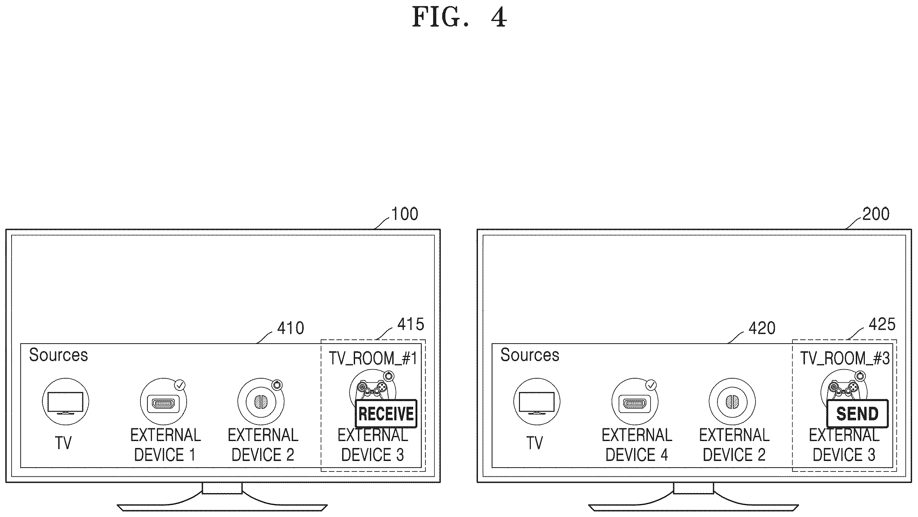

For example, referring to FIG. 4, a first item 415 included in an external device list 410 may be an item corresponding to a first external device connected to the second display device 200. The first display device 100 may be a device (e.g., a sink device) which receives image data corresponding to the first external device via the second display device 200, and the first item 415 may include information indicating that the first display device 100 is a device which receives image data. For example, the first item 415 may include a text "Receive" or may display an arrow indicating a direction in which data is received. However, the present disclosure is not limited thereto, and the information indicating that the first display device 100 is a sink device may be displayed on the first item 415 in various ways.

Meanwhile, the second display device 200 according to an embodiment may also display an external device list, and an external device list 420 displayed in the second display device 200 may include a second item 425, which includes information about the first display device 100 and information about the first external device.

In this case, the second item 425 may include information indicating that the second display device 200 is a device (e.g., a source device) which transmits image data received from the first external device to the first display device 100. For example, the second item 425 may include a text "Send" or may display an arrow indicating a direction in which data is transmitted. However, the present disclosure is not limited thereto, and the information indicating that the second display device 200 is a source device may be displayed on the second item 425 in various ways.

Referring to FIG. 2 again, the first display device 100 may receive an input of selecting any one of a plurality of items included in the external device list 210. The first display device 100 may receive an external input image from an external device corresponding to the selected item and display the received external input image.

For example, when the first item 231 or the second item 232 is selected, the first display device 100 may request the second display device 200 for an image corresponding to the first external device or second external device connected to the second display device 200. The second display device 200 may receive image data from the first external device or the second external device, encode the received image, and transmit same to the first display device 100.

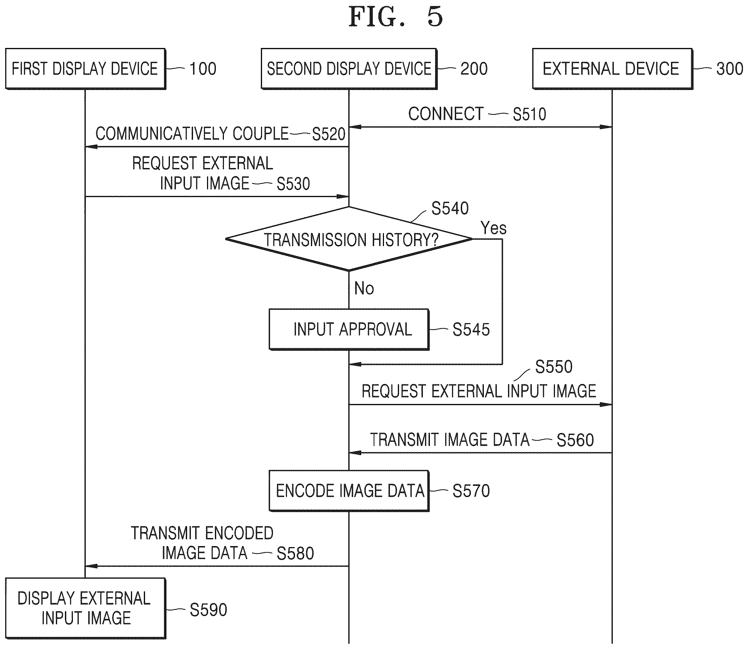

A method by which the first display device 100 receives an image corresponding to an external device via the second display device 200 according to an embodiment is described in detail with reference to FIG. 5.

FIG. 5 is a flowchart illustrating a method by which the first display device receives an image corresponding to an external device through the second display device, according to an embodiment.

Referring to FIG. 5, the second display device 200 according to an embodiment may be connected to the external device 300 (S510). The external device 300 according to an embodiment may any one of the first external device 300-1 and the second external device 300-2 shown and described in FIG. 1.

For example, the second display device 200 may be connected to the external device 300 via a HDMI port, a MHL port, a USB port, a DP, a thunderbolt port, a VGA port, an RGB port, a D-SUB, a DVI, a component jack, a PC port, etc. However, the present disclosure is not limited thereto, and the second display device 200 and the external device 300 may be connected to each other via short-range wireless communication, such as wireless LAN (e.g., Wi-Fi), Bluetooth, etc. The second display device 200 and the external device 300 may transmit or receive video, audio, and additional information by using connected communication.

The first display device 100 and the second display device 200 according to an embodiment may be communicatively connected via at least one communication scheme (S520).

For example, the first display device 100 and the second display device 200 may be connected to each other through short-range wireless communication, such as wireless LAN (e.g., Wi-Fi), Bluetooth, etc. The first display device 100 and the second display device 200 may transmit or receive video, audio, and additional information by using communication connected thereto.

The first display device 100 according to an embodiment may perform connection with any one of external devices connected to the second display device 200. In this case, connection between the first display device 100 and the external device 300 may not denote a direct connection, but rather a connection via the second display device 200.

The first display device 100 may request the second display device 200 for an external input image (S530). In this case, the external input image may denote an image received from the external device 300 (e.g., image data corresponding to the external device 300).

When receiving a user input for selecting an item corresponding to the external device connected to the second display device 200 from among the items included in the external device list shown and described in FIGS. 2 to 4, the first display device 100 may request the second display device 200 for an external input image.

When receiving the request for an external input image from the first display device 100, the second display device 200 may determine whether an external input image of the external device has ever been transmitted to the first display device 100 (S540). For example, the second display device 200 may store a history of transmitting an image received from the external device connected to the second display device 200 to another display device connected to the second display device 200. The second display device 200 may identify, based on the stored history, whether the external input image of the external device 300 requested by the first display device 100 has ever been transmitted to the first display device 100.

When the external input image of the external device 300 has ever been transmitted to the first display device 100, the second display device 200 may request the external device 300 for an external input image without a separate process of approving the request (S550).

On the other hand, when the external input image of the external device 300 has never been transmitted to the first display device 100, the second display device 200 may require a process of approving the request of the first display device 100. When receiving a user input for approving the request of the first display device 100 (S545), the second display device 200 may request the external device 300 for an external input image (S550).

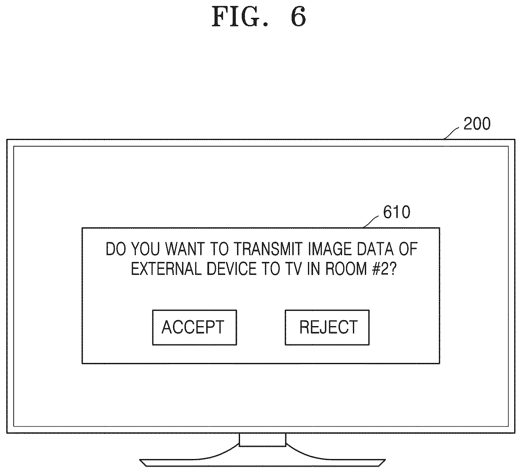

FIG. 6 is a diagram for describing a process of approving, by the second display device 200, a request from the first display device 100, according to an embodiment.

For example, as shown in FIG. 6, the second display device 200 may display a message 610 requesting approval of an operation of transmitting the external input image of the external device 300 to the first display device 100. The second display device 200 may receive a user input for selecting an acceptance item included in the message 610. The second display device 200 may request the external device 300 for an external image based on the user input for selecting the acceptance item.

However, a process of approving the request for an operation of transmitting the external input image to the first display device 100, shown in FIG. 6, is only an example, and the present disclosure is not limited thereto, and the request for the operation of transmitting the external input image to the first display device 100 may be approved in various ways.

Referring to FIG. 5 again, the external device 300 according to an embodiment may transmit image data to the second display device 200 based on an external input image request of the second display device 200 (S560).

The second display device 200 may encode the image data received from the external device 300 (S570).

For example, the second display device 200 may encode the image received from the external device to reduce an amount of information. For example, the encoding may include a process of generating predicted data by predicting image data, a process of generating residual data corresponding to a difference between the image data and the predicted data, a process of transforming the residual data, which is a spatial area component, into a frequency domain component, a process of quantizing the residual data transformed into the frequency domain component, a process of entropy encoding the quantized residual data. Such encoding may be implemented through one of image compression methods using frequency transformation, such as MPEG-2, H.264 Advanced Video Coding (AVC), MPEG-4, High Efficiency Video Coding (HEVC), VC-1, VP8, VP9, AOMedia Video 1 (AV1), and etc. However, the present disclosure is not limited thereto.

The second display device 200 may transmit the encoded image data to the first display device 100 (S580).

For example, the second display device 200 may transmit the encoded image data to the first display device 100 in the form of a bitstream.

The first display device 100 may decode the image data received from the second display device 200 and display an external input image on the display (S590).

For example, the decoding may include may include a process of generating quantized residual data by entropy decoding image data, a process of dequantizing the quantized residual data, a process of transforming the residual data of frequency domain components into spatial domain components, a process of generating predicted data, and a process of restoring the image data by using the predicted data and the residual data, and etc. Such decoding may be implemented through an image restoration method corresponding to one of image compression methods using frequency transformation, such as MPEG-2, H.264, MPEG-4, HEVC, VC-1, VP8, VP9, and AV1 used for the encoding.

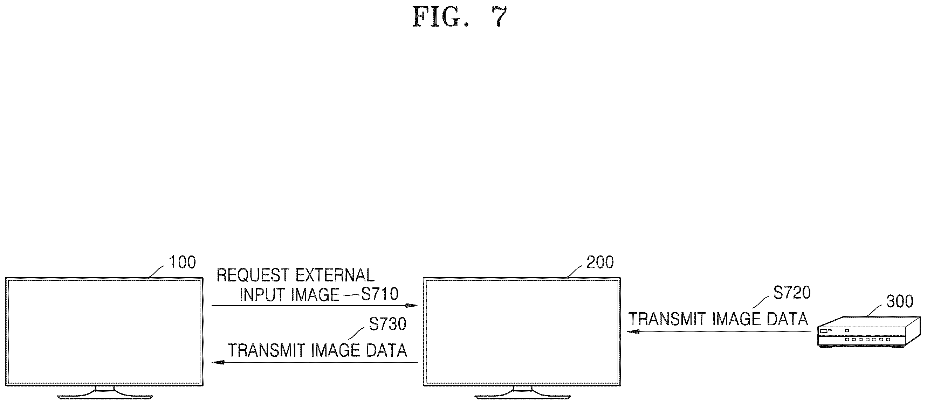

FIG. 7 is a diagram illustrating an operation of receiving, by the first display device, an external input image from the second display device, according to an embodiment.

The first display device 100 according to an embodiment may request the second display device 200 for an external input image (S710).

For example, as shown in FIGS. 2 to 4, in a source setting menu, when receiving an input for selecting an item corresponding to an external device connected to the second display device 200, the first display device 100 may request the second display device 200 for an external input image.

The second display device 200 may receive image data from the external device 300 corresponding to the external input image requested by the first display device 100 (S720). The second display device 200 may encode the image data received from the external device 300 and transmit the same to the first display device 100 (S730).

When the first display device 100 according to an embodiment requests an external input image and the power of at least one of the second display device 200 and the external device 300 is turned off, the first display device 100 may transmit, to the second display device 200, a signal for turning on the power of the second display device 200 or the external device 300. The powered-off state may indicate that the device is turned off, in sleep mode, or in suspend mode. For example, the sleep mode may indicate an operation state in which no power is supplied to a processor. In the sleep mode, an operation of the processor may be suspended because the scheduling of a process scheduler is suspended. When a microcontroller receives a power-on signal in sleep mode or suspend mode, power may be supplied to the processor and the processor may operate in normal mode.

For example, the first display device 100 may transmit, to the second display device 200, a signal for turning on the power of the second display device 200 or the external device 300, so as to control the second display device 200 or the external device 300 to operate in normal mode.

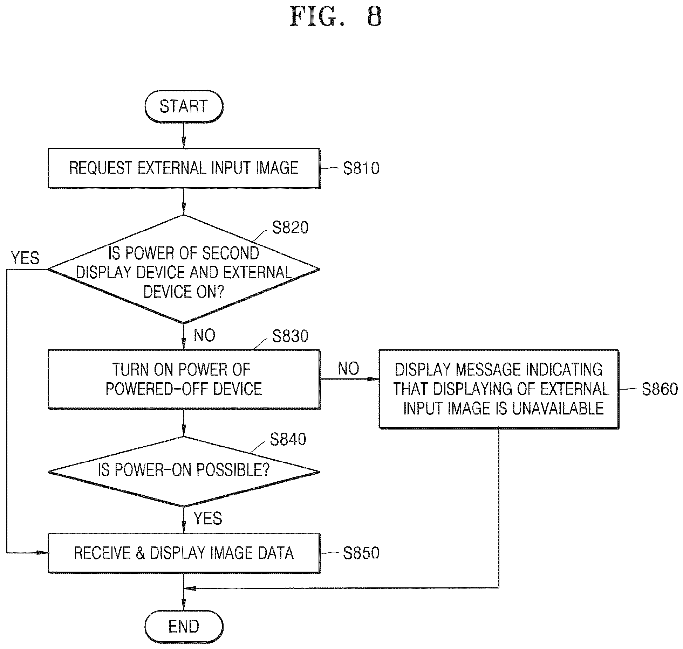

This is described in detail with reference to FIGS. 8 to 11.

FIG. 8 is a flowchart illustrating an operating method of receiving, by the first display device, an external input image from the second display device, according to an embodiment.

Referring to FIG. 8, the first display device 100 according to an embodiment may request the second display device 200 for an external input image (S810).

For example, as shown in FIGS. 2 to 4, in the source setting menu, when receiving an input for selecting an item corresponding to an external device connected to the second display device 200, the first display device 100 may request the second display device 200 for an external input image.

**In** this case, the first display device 100 may identify a powered-on/powered-off state of the second display device 200 and the external device 300 (S820).

When both the second display device 200 and the external device 300 is turned on, the first display device 100 may receive image data from the second display device 200 and display the same (S850). For example, the second display device 200 may receive image data from the external device 300, encode the received image data, and transmit the same to the first display device 100. The first display device 100 may decode and display the image data received from the second display device 200.

On the other hand, when at least one of the second display device 200 and the external device 300 is turned off, the first display device 100 may transmit, to the second display device 200, a signal for turning on the power of the device in a powered-off state.

When both the second display device 200 and the external device 300 enters a powered-on state, the first display device 100 may receive image data from the second display device 200 and display the same. For example, the second display device 200 may receive image data from the external device 300, encode the received image data, and transmit the same to the first display device 100. The first display device 100 may decode and display the image data received from the second display device 200 (S850).

On the other hand, when at least one of the second display device 200 and the external device 300 cannot be turned off, the first display device 100 may display a message indicating that the external input image cannot be received or displayed (S860).

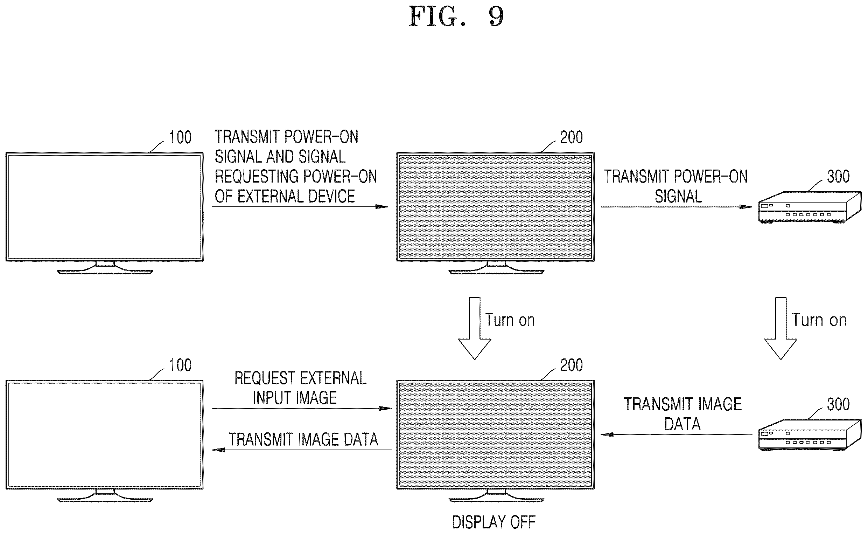

FIG. 9 is a diagram illustrating an operation of a case where both the second display device and the external device are in a powered-off state, according to an embodiment.

Referring to FIG. 9, the first display device 100 according to an embodiment may be connected to the second display device 200 and the second display device 200 may be connected to the external device 300.

The second display device 200 and the external device 300 according to an embodiment may be a powered-off state. The powered-off state may indicate that the device is turned off, in sleep mode, or in suspend mode.

The first display device 100 may transmit, to the second display device 200, a first signal for turning on the second display device 200 and a second signal for requesting power-on of the external device 300.

The second display device 200 may turn on the second display device 200 based on the first signal received from the first display device 100. In this case, the second display device 200 may maintain the display in an off state even when the power is turned on.

The second display device 200 may transmit, to the external device 300, a signal for turning on the external device based on the second signal received from the first display device 100. For example, when the second display device 200 and the external device 300 are connected via an HDMI cable, the second display device 200 may transmit a power-on signal to the external device 300 via HDMI CEC. Alternatively, the second display device 200 may transmit a power-on signal to the external device 300 by using a control code corresponding to the external device 300. However, the present disclosure is not limited thereto.

When the second display device 200 and the external device 300 enters a power-on state, the second display device 200 may receive image data from the external device 300, encode the received image data, and transmit the same to the first display device 100. The first display device 100 may decode the received image data and display the same on the display.

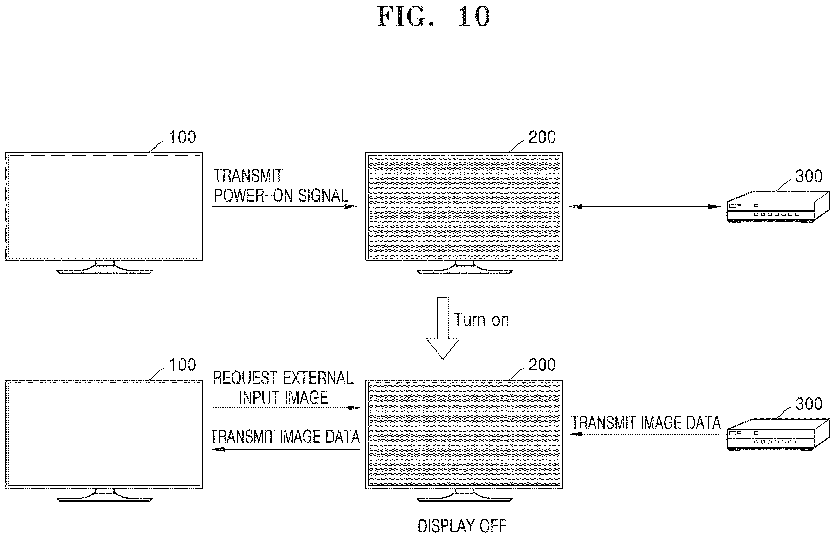

FIG. 10 is a diagram illustrating an operation of a case where the second display device is a powered-off state, according to an embodiment.

Referring to FIG. 10, the first display device 100 according to an embodiment may be connected to the second display device 200 and the second display device 200 may be connected to the external device 300.

The second display device 200 according to an embodiment may be a powered-off state. The first display device 100 may transmit, to the second display device 200, a signal for turning on the second display device 200.

The second display device 200 may turn on the second display device 200 based on the signal received from the first display device 100. In this case, the second display device 200 may maintain the display in an off state even when the power is turned on.

When the second display device 200 is turned on, the second display device 200 may receive image data from the external device 300, encode the received image data, and transmit the same to the first display device 100. The first display device 100 may decode the received image data and display the same on the display.

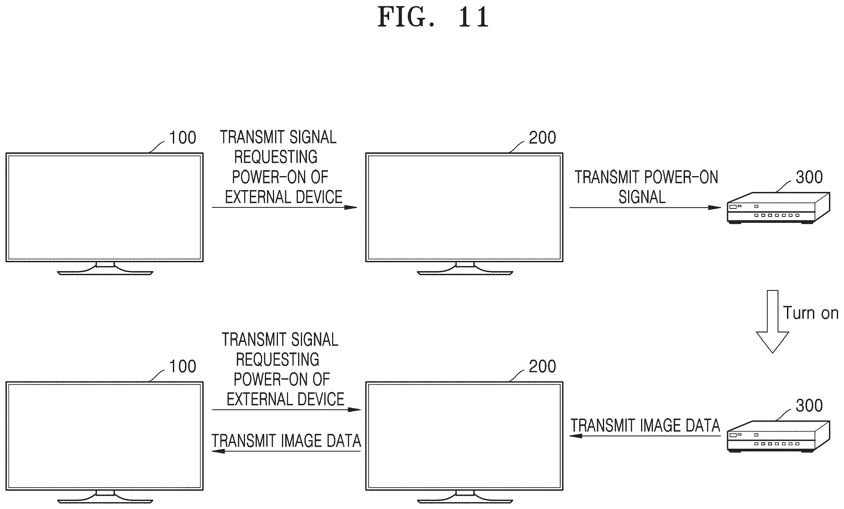

FIG. 11 is a diagram illustrating an operation of a case where the external device is a powered-off state, according to an embodiment.

Referring to FIG. 11, the first display device 100 according to an embodiment may be connected to the second display device 200 and the second display device 200 may be connected to the external device 300.

The external device 300 according to an embodiment may be a powered-off state.

The first display device 100 may transmit, to the second display device 200, a signal for turning on the external device 300.

The second display device 200 may transmit, to the external device 300, a signal for turning on the external device based on the signal received from the first display device 100.

For example, when the second display device 200 and the external device 300 are connected via an HDMI cable, the second display device 200 may transmit a power-on signal to the external device 300 via HDMI CEC. Alternatively, the second display device 200 may transmit a power-on signal to the external device 300 by using a control code corresponding to the external device 300. However, the present disclosure is not limited thereto.

When the external device 300 is turned on, the second display device 200 may receive image data from the external device 300, encode the received image data, and transmit the same to the first display device 100. The first display device 100 may decode the received image data and display the same on the display.

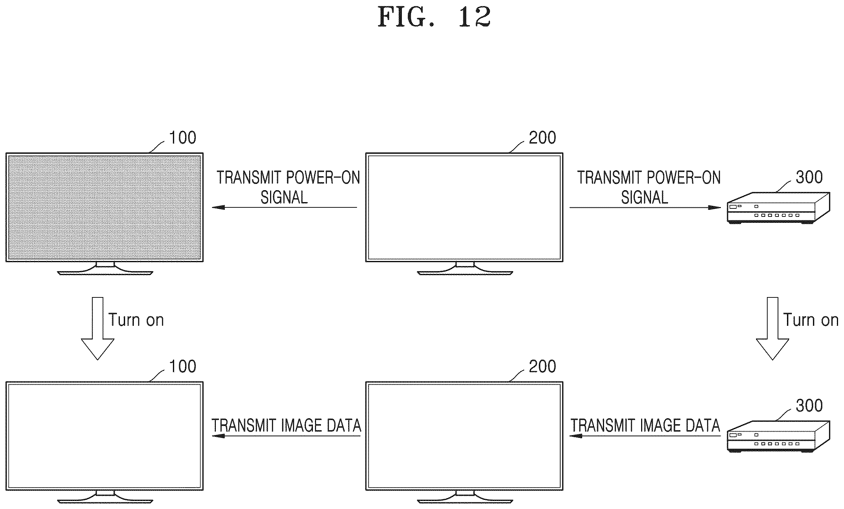

FIGS. 12 to 14 are diagrams illustrating an operation of a case where the second display device requests to transmit the external input image to the first display device, according to an embodiment.

Referring to FIGS. 12 to 14, the first display device 100 according to an embodiment may be connected to the second display device 200 and the second display device 200 may be connected to the external device 300.

Referring to FIG. 12, the first display device 100 and the external device 300 according to an embodiment may be a powered-off state.

The second display device 200 may transmit, to the first display device 100, a signal for turning on the first display device 100. The first display device 100 may turn on the first display device 100 based on the signal received from the second display device 200. In this case, the first display device 100 may also turn on the display.

The second display device 200 may transmit, to the external device 300, a signal for turning on the external device 300. For example, when the second display device 200 and the external device 300 are connected via an HDMI cable, the second display device 200 may transmit a power-on signal to the external device 300 via HDMI CEC. Alternatively, the second display device 200 may transmit a power-on signal to the external device 300 by using a control code corresponding to the external device 300. However, the present disclosure is not limited thereto.

When the first display device 100 and the external device 300 enters a power-on state, the second display device 200 may receive image data from the external device 300, encode the received image data, and transmit the same to the first display device 100.

The first display device 100 may decode the received image data and display the same on the display.

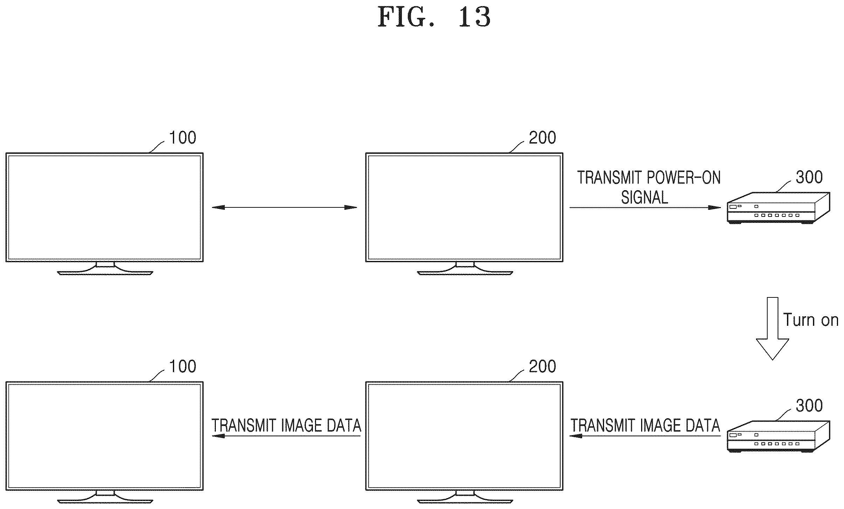

Referring to FIG. 13, the external device 300 according to an embodiment may be a powered-off state.

The second display device 200 may transmit, to the external device 300, a signal for turning on the external device. For example, when the second display device 200 and the external device 300 are connected via an HDMI cable, the second display device 200 may transmit a power-on signal to the external device 300 via HDMI CEC. Alternatively, the second display device 200 may transmit a power-on signal to the external device 300 by using a control code corresponding to the external device 300. However, the present disclosure is not limited thereto.

When the external device 300 enters a power-on state, the second display device 200 may receive image data from the external device 300, encode the received image data, and transmit the same to the first display device 100. The first display device 100 may decode the received image data and display the same on the display.

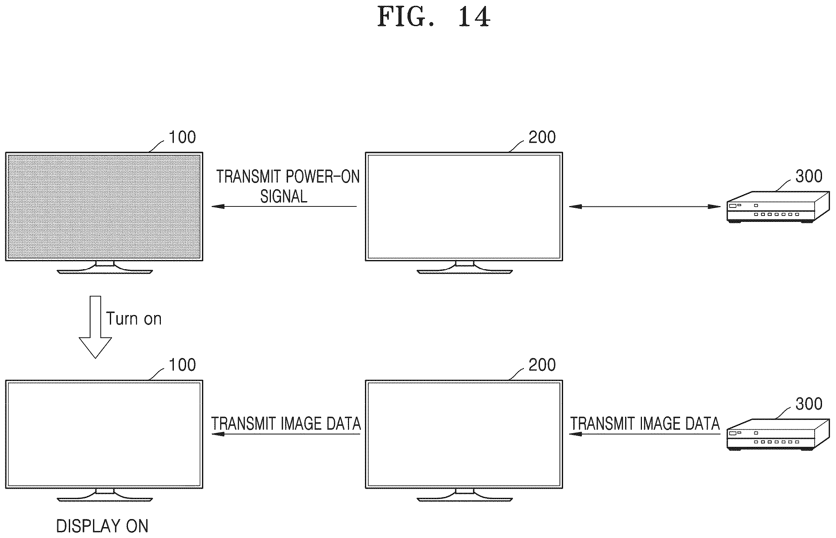

Referring to FIG. 14, the first display device 100 according to an embodiment may be a powered-off state.

The second display device 200 may transmit, to the first display device 100, a signal for turning on the first display device 100. The first display device 100 may turn on the first display device 100 based on the signal received from the second display device 200. In this case, the first display device 100 may also turn on the display.

When the first display device 100 enters a powered-on state, the second display device 200 may receive image data from the external device 300, encode the received image data, and transmit the same to the first display device 100. The first display device 100 may decode the received image data and display the same on the display.

However, when the power of at least one of the first display device 100 and the external device 300 cannot be turned on, the second display device 200 according to an embodiment may display a message indicating that the external input image cannot be transmitted to the first display device.

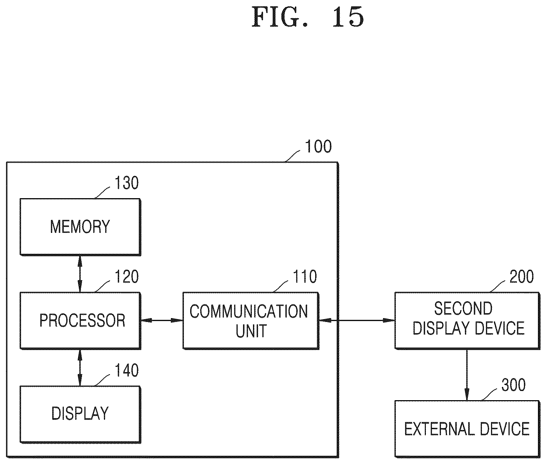

FIG. 15 is a block diagram illustrating a configuration of the first display device according to an embodiment.

Referring to FIG. 15, the first display device 100 according to an embodiment may include a communication unit 110, a processor 120, a memory 130, and a display 140.

The communication unit 110 according to an embodiment may transmit and receive data or signals to and from an external device (e.g., the second display device 200 and a control device) or a server. For example, the communication unit 110 may include a Wi-Fi module, a Bluetooth module, an infrared communication module and a wireless communication module, a LAN module, an Ethernet module, a wired communication module, etc. In this case, each of the communication modules may be implemented in the form of at least one hardware chip.

The Wi-Fi module and the Bluetooth module may communicate by using a Wi-Fi scheme and a Bluetooth scheme, respectively. When the Wi-Fi module or the Bluetooth module are used, various connection information, such as an SSID and a session key, may be transmitted and received first, and after communication connection is made by using the same, various information may be transmitted and received. The wireless communication module may include at least one communication chip which performs communication according to various wireless communication standards, such as Zigbee, 3^{rd} Generation (3G), 3^{rd} Generation Partnership Project (3GPP), Long Term Evolution (LTE), LTE Advanced (LTE-A), 4^{th} Generation (4G), 5^{th} Generation (5G), etc.

The communication unit 110 according to an embodiment may transmit an external input image request to the second display device 200 and receive an external input image from the second display device 200.

The communication unit 110 according to an embodiment may receive a control signal, a control command, or etc. from a control device. For example, the communication unit 110 may include an IR module capable of transmitting and receiving signals to and from the control device according to IR communication standards. Specifically, the communication unit 110 may receive, from the control device, a control signal or a control command corresponding to a user input (e.g., input of a key or button of the control device).

The processor 120 according to an embodiment may control an overall operation of the first display device 100 and a signal flow between internal elements of the display device 100, and perform a data processing function.

The processor 120 may include single core, dual core, triple core, quad core, and multiples thereof. In addition, the processor 120 may include a plurality of processors. For example, the processor 120 may be implemented as a main processor (not shown) and a sub processor (not shown) which operates in sleep mode.

In addition, the processor 120 may include at least one of a central processing unit (CPU), a graphic processing unit (GPU), and a video processing unit (VPU). Alternatively, depending on the embodiment, the processor may be implemented in the form of an system on chip (SoC) integrating at least one of a CPU, a GPU, and a VPU. Alternatively, the processor 120 may further include a neural processing unit (NPU).

The memory 130 according to an embodiment may store various data, programs, or applications for driving and controlling the display device 100.

**In** addition, the programs stored in the memory 130 may include one or more instructions. The programs (one or more instructions) or applications stored in the memory 130 may be executed by the processor 120.

The processor 120 according to an embodiment may control the communication unit 110 such that the first display device 100 is communicatively coupled to the second display device 200.

The processor 120 according to an embodiment may control the display 140 to display a list of external devices connectable to the first display device 100. **In** this case, the external device list may include an item corresponding to the external device 300 connected to the second display device 200. The item may include a device type, model name, location information(e.g., ROOM #1), and on/off status information of the second display device 200 and a device type, model name, on/off status information of the external device, etc.

The processor 120 may control the communication unit 110 to transmit, to the second display device 200, a request for an external input image corresponding to the external device 300 based on a user input for selecting the item.

The processor 120 according to an embodiment may identify a powered-on/powered-off state of the second display device 200 and the external device 300. When the power of the second display device 200 is in the powered-off state, the processor 120 may transmit, to the second display device 200, a first signal for turning on the second display device 200. **In** addition, when the external device 300 is in the powered-off state, the processor 120 may transmit, to the second display device 200, a second signal for requesting the power of the external device 300 to be turned on.

The second display device 200 may turn on the second display device 200 based on the first signal received from the first display device 100. In this case, the display may be maintained in an off state even when the power of the second display device 200 is turned on.

**In** addition, the second display device 200 may transmit, to the external device 300, a signal for turning on the external device based on the second signal received from the first display device 100. The second display device 200 may transmit, to the external device 300 via an input/output interface, a signal for turning on the power. For example, when the second display device 200 and the external device 300 are connected via an HDMI cable, the second display device 200 may transmit a power-on signal to the external device 300 via HDMI CEC. Alternatively, the second display device 200 may transmit a power-on signal to the external device 300 by using a control code corresponding to the external device 300. However, the present disclosure is not limited thereto.

When an external input image request is received from the first display device 100, the second display device 200 according to an embodiment may request the external device 300 for an external input image.

The second display device 200 may encode the image data received from the external device 300. For example, the second display device 200 may encode the image data through one of the image compression methods using frequency transformation, such as MPEG-2, H.264 Advanced Video Coding (AVC), MPEG-4, High Efficiency Video Coding (HEVC), VC-1, VP8, VP9, AOMedia Video 1 (AV1), and etc. However, the present disclosure is not limited thereto.

The second display device 200 may transmit the encoded image data to the first display device 100.

The display 140 according to an embodiment may generate a driving signal by transforming an image signal, a data signal, an OSD signal, a control signal, etc. processed by the processor 120. The display 140 may be implemented as a PDP, an LCD, an OLED, a flexible display, etc., and may also be implemented as a three-dimensional (3D) display. In addition, the display 140 may be configured as a touch screen and used as an input device in addition to an output device.

The processor 120 according to an embodiment may decode the image data received from the second display device 200 and control the display 140 to display the same.

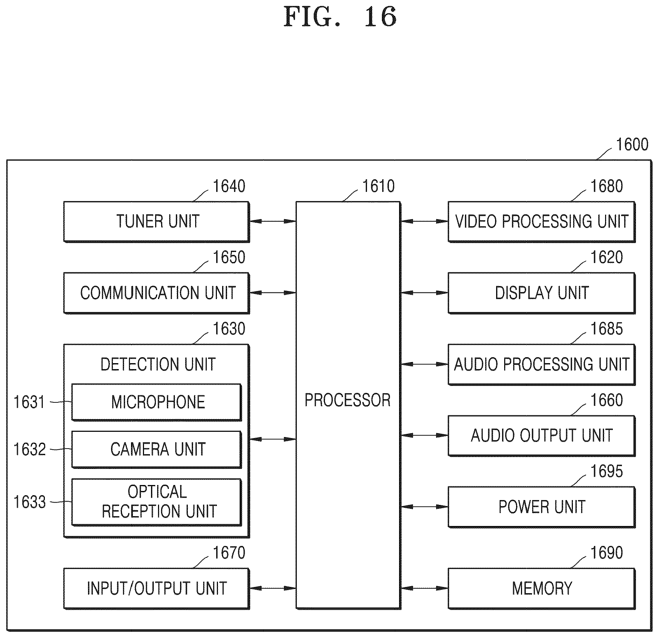

FIG. 16 is a block diagram illustrating a configuration of a display device according to an embodiment.

Referring to FIG. 16, a display device 1600 of FIG. 16 may be an embodiment of the first display device 100 or the second display device 200 described with reference to FIGS. 1 to 15.

Referring to FIG. 16, the display device 1600 according to an embodiment may include a tuner unit 1640, a processor 1610, a display unit 1620, a communication unit 1650, a detection unit 1630, an input/output unit 1670, a video processing unit 1680, an audio processing unit 1685, an audio output unit 1660, a memory 1690, and a power unit 1695.

The communication unit 1650 in FIG. 16 may be an element corresponding to the communication unit 110 in FIG. 15, the processor 1610 in FIG. 16 may be an element corresponding to the processor 120 in FIG. 15, the memory 1690 in FIG. 16 may be an element corresponding to the memory 130 in FIG. 5, and the display unit 1620 in FIG. 16 may be an element corresponding to the display 140 in FIG. 15. Thus, the same content as the content described above is omitted.

The tuner unit 1640 according to an embodiment may tune and select only a frequency of a channel to be received by the display device 1600 from among many radio wave components through amplifying, mixing, resonating, etc. a broadcast signal received wired or wirelessly. The broadcast signal may include audio, video, and additional information (e.g., an electronic program guide (EPG)).

The tuner unit 1640 may receive a broadcast signal from various sources, such as terrestrial broadcasting, cable broadcasting, satellite broadcasting, Internet broadcasting, etc. The tuner unit 1640 may also receive a broadcast signal from a source such as analog broadcasting, digital broadcasting, or etc.

The detection unit 1630 may detect user's speech, user's image, or user's interaction, and may include a microphone 1631, a camera unit 1632, and an optical reception unit 1633.

The microphone 1631 may receive a user's uttered speech. The microphone 1631 may convert the received speech into an electrical signal and output the same to the processor 1610. The user's speech may include, for example, a speech corresponding to a menu or a function of the display device 1600.

The camera unit 1632 may receive images (e.g., consecutive frames) corresponding to a user's motion including a gesture within a camera recognition range. The processor 1610 may select a menu displayed by the display device 1600 by using a recognition result of the received motion, or may perform control corresponding to the motion recognition result.

The optical reception unit 1633 may receive an optical signal (including a control signal) received from an external control device via an optical window (not shown) in a bezel of the display unit 1620. The optical reception unit 1633 may receive, from the control device, an optical signal corresponding to a user input (e.g., touch, press, touch gesture, speech, or motion). A control signal may be extracted from the received optical signal under the control by the processor 1610.

The input/output unit 1670 according to an embodiment may receive video (e.g., moving images, etc.), audio (e.g., speech, music, etc.), and additional information (e.g., EPG, etc.) from the outside of the display device 1600. The input/output unit 1670 may include any one of a high-definition multimedia interface (HDMI), a mobile high-definition link (MHL), a universal serial bus (USB), a display port (DP), a thunderbolt, a video graphics array (VGA) port, an RGB port, a D-subminiature (D-SUB), a digital visual interface (DVI), a component jack, and a PC port.

The processor 1610 may control an overall operation of the display device 1600 and a signal flow between internal elements of the display device 1600, and perform a data processing function. When a user input is present or a preset stored condition is met, the processor 1610 may execute an operation system (OS) and various applications stored in the memory 1690.

The processor 1610 may include a RAM which stores signals or data input from the outside of the display device 1600 or which is used as a storage area corresponding to various tasks performed in the display device 1600, a ROM for controlling the display device 1600, and a processor.

The video processing unit 1680 may perform processing on video data received by the display device 1600. The video processing unit 1680 may perform various image processing, such as decoding, scaling, noise filtering, frame rate conversion, resolution conversion, etc., on the video data.

The audio processing unit 1685 may perform processing on audio data. The audio processing unit 1685 may perform various processing, such as decoding, amplification, noise filtering, etc., on the audio data. Meanwhile, the audio processing unit 1685 may have a plurality of audio processing modules to process audio corresponding to a plurality of items of content.

The audio output unit 1660 may output audio included in a broadcast signal received via the tuner unit 1640 under the control by the processor 1610. The audio output unit 1660 may output audio (e.g., speech or sound) input via the communication unit 1650 or the input/output unit 1670. In addition, the audio output unit 1660 may output audio stored in the memory 1690 under the control by the processor 1610. The audio output unit 1660 may include at least one of a speaker, a headphone output terminal, or a Sony/Philips Digital Interface (S/PDIF) output terminal.

Under the control by the processor 1610, the power unit 1695 may supply power input from an external power source to internal elements of the display device 1600. In addition, the power unit 1695 may supply power output from one or two or more batteries (not shown) located inside the display device 1600 to the internal elements under the control by the processor 1610.

Under the control by the processor 1610, the memory 1690 may store various data, programs, or applications for driving or controlling the display device 1600. The memory 1690 may include a broadcast reception module, a channel control module, a volume control module, a communication control module, a speech recognition module, a motion recognition module, an optical reception module, a display control module, an audio control module, an external input control module, a power control module, a power control module of an external device connected wirelessly (e.g., via Bluetooth), a voice database DB, or a motion database (DB) not shown. The not shown modules and database of the memory 1290 may be implemented in the form of software to perform a control function of broadcast reception, a channel control function, a volume control function, a communication control function, a speech recognition function, a motion recognition function, an optical reception control function, a display control function, an audio control function, an external input control function, a power control function, or a power control function of an external device connected wirelessly (e.g., via Bluetooth) in the display device 1200. The processor 1210 may perform each function by using the software stored in the memory 1290.

Meanwhile, block diagrams of the display devices 100 and 1600 shown in FIGS. 15 and 16 are block diagrams for an embodiment. Each element of the block diagrams may be integrated, added, or omitted depending on the specifications of the display devices 100 and 1600 which are actually implemented. That is, when necessary, two or more elements may be integrated into one element, or one element may be subdivided and configured into two or more elements. In addition, functions performed by each block are to describe embodiments, and detailed operations or devices thereof do not limit the scope of rights of the present disclosure.

A first display device according to an embodiment may include a display, a communication unit, a memory storing one or more instructions, and at least one processor configured to execute the one or more instructions.

The at least one processor may execute the one or more instructions to control the communication unit to connect to a second display device.

The at least one processor may execute the one or more instructions to control the display to display an item including information about the second display device and information about an external device connected to the second display device.

The at least one processor may execute the one or more instructions to, based on a user input to select the item, control the communication unit to request the second display device for image data corresponding to the external device and receive the image data from the second display device.

The at least one processor may execute the one or more instructions to control the display to display the received image data.

The item may include information indicating that the first display device is a device which receives the image data.

The at least one processor may execute the one or more instructions to identify a powered-on/powered-off state of the second display device and the external device based on a user input to select the item.

The at least one processor may execute the one or more instructions to, based on power of at least one of the second display device and the external device being in an off state, control the communication unit to transmit a power-on signal to the second display device.

The at least one processor may execute the one or more instructions to, based on the power of the second display device is in an off state, control the communication unit to transmit, to the second display device, a signal for turning on the power of the second display device.

When the power of the second display device is turned on based on the signal for turning on the power, a display of the second display device may maintain an off state.

The at least one processor may execute the one or more instructions to, based on the power of the external device being in an off state, control the communication unit to transmit, to the second display device, a signal for requesting power-on of the external device.

The at least one processor may execute the one or more instructions to, based on the power of at least one of the second display device and the external device not being turned on, control the display to display a message indicating that the image data is not receivable.

The at least one processor may execute the one or more instructions to control the display to display a second item including information about a third display device connected to the first display device and information about a second external device connected to the first display device.

The at least one processor may execute the one or more instructions to, based on a user input to select the second item, control the communication unit to transmit, to the third display device, image data received from the second external device.

The first display device may further include an input/output interface connected to the second external device.

The second external device may be connected to the first display device via a high-definition multimedia interface (HDMI) or a display port.

The at least one processor may execute the one or more instructions to encode the image data received from the second external device.

The at least one processor may execute the one or more instructions to control the communication unit to transmit the encoded image data to the third display device.

The second item may include information indicating that the first display device is a device which transmits the image data.
an operating method of a first display device, according to an embodiment, may include an operation of communicatively coupling to a second display device.

The operating method of the first display device, according to an embodiment, may include an operation of displaying an item including information about the second display device and information about an external device connected to the second display device.

The operating method of the first display device, according to an embodiment, may include an operation of, based on a user input to select the item, requesting the second display device for image data corresponding to the external device.

The operating method of the first display device, according to an embodiment, may include an operation of receiving the image data from the second display device.

The operating method of the first display device, according to an embodiment, may include an operation of displaying the received image data.

The item may include information indicating that the first display device is a device which receives the image data.

The operating method of the first display device, according to an embodiment, may include an operation of, based on a user input to select the item, identifying a powered-on/powered-off state of the second display device and the external device.

The operating method of the first display device, according to an embodiment, may further include, based on the power of at least one of the second display device and the external device being in an off state, transmitting a power-on signal to the second display device.

The operation of transmitting the power-on signal to the second display device may include an operation of, based on the power of the second display device being in an off state, transmitting, to the second display device, a signal for turning on the power of the second display device.

The operation of transmitting the power-on signal to the second display device may include an operation of, based on the power of the external device being in the off state, transmitting a signal requesting power-on of the external device to the second display device.

The operating method of the first display device, according to an embodiment, may further include an operation of, based on the power of at least one of the second display device and the external device not being turned on, displaying a message indicating that the image data is not receivable.

The operating method of the first display device, according to an embodiment, may further include an operation of displaying a second item including information about a third display device connected to the first display device and information about a second external device connected to the first display device.

The operating method of the first display device, according to an embodiment, may further include an operation of, based on a user input to select the second item, transmitting image data received from the second external device to the third display device.

The second item may include information indicating that the first display device is a device which transmits the image data.

A display device according to an embodiment may provide, to a user interface, an item including information about another display devices and information about an external device connected to the other display device, so that a user may request an image corresponding to the external device through an input to select the item, and receive and display the same. Thus, the use convenience of the user may be enhanced.

An operating method of a display device, according to an embodiment, may be implemented in the form of a program command executable through various computer devices and recorded in a computer-readable medium. The computer-readable medium may include program commands, data files, data structures, etc. alone or in combination. The program commands recorded in the medium may be specifically designed and configured for the present disclosure or may be known and available to those skilled in the art of computer software. Examples of the computer-readable recording medium include magnetic media such as hard disks, floppy disks, and magnetic tape, optical media such as CD-ROMs and DVDs, magneto-optical media such as floptical disks, and hardware devices specifically configured to store and execute program commands, such as ROM, RAM, and flash memory. Examples of the program command may include not only machine language code, such as that produced by a compiler, but also high-level language code executable by a computer using an interpreter, etc.

In addition, at least one of an operating method of a display device and an operating method of an electronic device, according to the disclosed embodiments, may be included and provided in a computer program product. The computer program product may be traded between sellers and buyers as commodities.

The computer program product may include a S/W program and a computer-readable storage medium in which the S/W program is stored. For example, the computer program product may include a product in the form of an S/W program (e.g., a downloadable application) distributed electronically by a manufacturer of an electronic device or through an electronic marketplace (e.g., Google Play Store and App Store). For electronic distribution, at least a portion of the S/W program may be stored in a storage medium or may be generated temporarily. In this case, the storage medium may be a storage medium of a server of a manufacturer, a server of an electronic market, or a relay server temporarily storing the S/W program.

In a system including a server and a client device, the computer program product may include a storage medium of the server or a storage medium of the client device. Alternatively, when a third device (e.g., smartphone) communicatively coupled to the server or the client device is present, the computer program product may include a storage medium of the third device. Alternatively, the computer program product may include an S/W program itself, transmitted from the server to the client device or the third device or transmitted from the third device to the client device.

In this case, one of the server, the client device, and the third device may execute the computer program product and execute the method according to the disclosed embodiments. Alternatively, two or more of the server, the client device, and the third device may execute the computer program product and work the method according to the disclosed embodiments in a distributed manner.

For example, the server (e.g., a cloud server, an artificial intelligence server, or etc.) may execute a computer program product stored in the server to control a client communicatively coupled to the server to execute the method according to the disclosed embodiments.

Although the embodiments are described in detail above, the scope of the present disclosure is not limited thereto, and various modifications and improvements made by those skilled in the art using the basic concept of the present disclosure defined in the following claims also fall within the scope of the present disclosure.

## Claims

1. A first display device (100) comprising:
a display (140);
a communication unit (110);
a memory (130) storing one or more instructions; and
at least one processor (120) configured to execute the one or more instructions,
wherein the at least one processor (120) executes the one or more instructions to:
control the communication unit to communicatively couple to a second display device;
control the display to display an item including information about the second display device and information about an external device connected to the second display device;
control the communication unit to, based on a user input to select the item, request the second display device for image data corresponding to the external device, and receive the image data from the second display device; and
control the display to display the received image data.

2. The first display device (100) of claim 1, wherein the item comprises information indicating that the first display device is a device which receives the image data.

3. The first display device (100) of claim 1 or claim 2, wherein the at least one processor (120) executes the one or more instructions to:
based on a user input to select the item, identify an on/off state of power of the second display device and the external device; and
based on power of at least one of the second display device and the external device being in an off state, control the communication unit to transmit a power-on signal to the second display device.

4. The first display device (100) of claim 3, wherein the at least one processor (120) executes the one or more instructions to, based on the power of the second display device being in the off state, control the communication unit to transmit, to the second display device, a signal for turning on the power of the second display device.

5. The first display device (100) of claim 4, wherein, when the power of the second display device is turned on based on the signal for turning on the power, a display of the second display device maintains an off state.

6. The first display device (100) of claim 4 or claim 5, wherein the at least
one processor (120) executes the one or more instructions to,
based on the power of the external device being in the off state, control the communication unit to transmit, to the second display device, a signal requesting to turn on the power of the external device.

7. The first display device (100) of any one of claims 4 to 6, wherein the at least one processor (120) executes the one or more instructions to, based on power of at least one of the second display device and the external device not being turned on, control the display to display a message indicating that the image data is not receivable.

8. The first display device (100) of any one of claims 1 to 7, wherein the at least one processor (120) executes the one or more instructions to:
control the display to display a second item including information about a third display device connected to the first display device and information about a second external device connected to the first display device; and
based on a user input to select the second item, control the communication unit to transmit image data received from the second external device to the third display device.

9. The first display device (100) of claim 8, wherein the first display device
further comprises an input/output interface connected to the second external device, and
the second external device is connected to the first display device via a High-Definition Multimedia Interface (HDMI) or a display port (DP).

10. The first display device (100) of claim 8 or claim 9, wherein the at least one processor (120) executes the one or more instructions to:
encode the image data received from the second external device; and
control the communication unit (110) to transmit the encoded image data to the third display device.

11. The first display device (100) of any one of claims 8 to 10, wherein the second item comprises information indicating that the first display device is a device which transmits the image data.

12. An operating method of a first display device, the operating method comprising:
communicatively coupling to a second display device;
displaying an item including information about the second display device and information about an external device connected to the second display device;
based on a user input to select the item, requesting the second display device for image data corresponding to the external device;
receiving the image data from the second display device; and
displaying the received image data.

13. The operating method of claim 12, wherein the item comprises information indicating that the first display device is a device which receives the image data.

14. The operating method of claim 12 or claim 13, wherein the operating method further comprises:
based on a user input to select the item, identifying an on/off state of power of the second display device and the external device; and
based on power of at least one of the second display device and the external device being in an off state, transmitting a power-on signal to the second display device.

15. A computer-readable recording medium storing a program to execute the method of any one of claims 12 to 14.
